# FASCICULE DE BREVET EUROPEEN

(11) **EP 1 432 493 B1**
(45) Date de publication et mention de la délivrance du brevet: **30.08.2006**
(21) Numéro de dépôt: 02798754.4
(22) Date de dépôt: 05.08.2002
(51) Int. Cl.: B01D 50/00

(54) **SEPARATEUR DE PHASES GAZEUSE ET LIQUIDE, ET ENSEMBLE DE PRODUCTION D'ENERGIE A BASE DE PILE A COMBUSTIBLE POURVU D'UN TEL SEPARATEUR**
GAS/FLÜSSIGPHASENTRENNVORRICHTUNG UND MIT EINER SOLCHEN TRENNVORRICHTUNG AUSGESTATTETE ENERGIEERZEUGUNGSEINHEIT AUF BRENNSTOFFZELLENBASIS
GAS/LIQUID PHASE SEPARATOR AND THE FUEL CELL-BASED POWER PRODUCTION UNIT EQUIPPED WITH ONE SUCH SEPARATOR

(30) Priorité: 20.09.2001 FR 0112154
(43) Date de publication de la demande: 30.06.2004
(73) Titulaire: L'AIR LIQUIDE, Société Anonyme à Directoire et Conseil de Surveillance pour l'Etude et l'Exploitation des, 75321 Paris Cedex 07 (FR)
(72) Inventeur: CHARLAT, Pierre, F-38250 Lans En Vercors (FR)
(74) Mandataire: Le Moenner, Gabriel
(86) Numéro de dépôt international: PCT/FR2002/002801
(87) Numéro de publication internationale: WO 2003/024554

(56) Documents cités:
- GB-A- 2 194 180
- US-A- 2 747 687
- US-A- 3 890 123

## Description

La présente invention concerne un séparateur de phases gazeuse et liquide, ainsi qu'un ensemble de production d'énergie à base de pile à combustible pourvu d'un tel séparateur.

Les séparateurs de phases gazeuse et liquide sont utilisés dans de nombreuses applications industrielles, en particulier dans le domaine de la production d'énergie à base de pile à combustible.

De façon classique, un ensemble de production d'énergie à base de pile à combustible comprend un bloc pile, qui comporte un compartiment anodique, où se produit l'oxydation de l'hydrogène, ainsi qu'un compartiment cathodique, dans lequel l'oxygène de l'air est réduit, avec production d'eau.

Il est alors connu voir US 3890123 de disposer, en aval du compartiment cathodique, un séparateur de phases permettant la séparation de l'air appauvri en oxygène et de l'eau, qui sont évacués de ce compartiment cathodique. Il est également possible de disposer un autre séparateur de phases, sur la conduite de sortie du compartiment anodique, qui véhicule un mélange d'hydrogène et d'eau.

L'invention se propose de réaliser un séparateur de phases avantageux en termes de compacité, qui puisse notamment, mais non exclusivement, être utilisé dans un ensemble de production d'énergie à base de pile à combustible.

A cet effet, elle a pour objet un séparateur de phases gazeuse et liquide, comprenant un corps, une entrée d'un mélange diphasique à séparer, comportant du gaz et du liquide, une sortie de gaz et une sortie de liquide, caractérisé en ce qu'il comprend en outre une structure hydrophile, qui est disposée dans le corps et délimite un espace intérieur et un espace extérieur de ce corps, en ce qu'il est prévu des moyens, permettant de créer des tourbillons dans le mélange diphasique, lorsque celui-ci s'écoule dans ledit espace intérieur, de manière à récupérer le liquide contre les parois de ladite structure hydrophile, en ce que la sortie de gaz est en communication avec l'espace intérieur, et en ce que la sortie de liquide est en communication avec l'espace extérieur.

Selon d'autres caractéristiques de l'invention :
- les moyens de création des tourbillons comprennent un organe rapporté profilé, notamment une hélice ;
- les moyens de création des tourbillons sont constitués par ladite structure hydrophile ;

L'invention a également pour objet un ensemble de production d'énergie à base de pile à combustible, comprenant un bloc pile à combustible, qui comporte un compartiment cathodique, un compartiment anodique, au moins deux circuits d'alimentation en gaz et au moins deux circuits d'évacuation, dont chacun permet d'évacuer un mélange de gaz et d'eau hors du bloc pile, cet ensemble étant caractérisé en ce qu'au moins un circuit d'évacuation débouche dans un séparateur de phases gazeuse et liquide, tel que défini ci-dessus.

L'invention sera mieux comprise à la lecture de la description qui va suivre, donnée uniquement à titre d'exemple non limitatif et faite en se référant aux dessins annexés, sur lesquels :
- La figure 1 est une vue schématique, illustrant un ensemble de production d'énergie à base de pile à combustible, équipé d'un séparateur de phases conforme à l'invention ;
- La figure 2 est une vue en coupe diamétrale, illustrant de façon plus précise ce séparateur de phases ;
- La figure 3 est une vue en coupe, analogue à la figure 2, illustrant un séparateur de phases conforme à une première variante de réalisation de l'invention ;
- La figure 4 est une vue en coupe selon la ligne IV-IV à la figure 3 ;
- La figure 5 est une vue en coupe analogue aux figures 1 et 2, illustrant un séparateur de phases conforme à une autre variante de réalisation de l'invention ; et
- La figure 6 est une vue en coupe selon la ligne VI-VI à la figure 4.

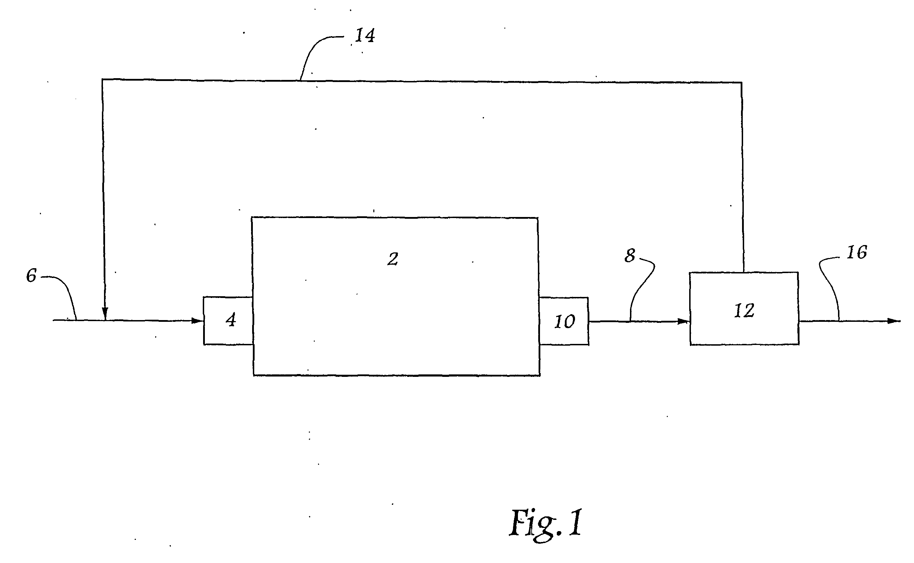

L'ensemble de production d'énergie, représenté schématiquement sur la figure 1, comprend un bloc pile à combustible, qui comporte une cathode 2, ainsi qu'une anode non représentée.

Ce compartiment cathodique 2 reçoit, à une entrée 4, un circuit 6 d'alimentation en air. Par ailleurs, un circuit 8 permet l'évacuation, depuis la sortie 10 de cette cathode, d'un mélange d'air appauvri en oxygène et d'eau.

Le circuit d'évacuation 8 débouche dans un séparateur 12, permettant de séparer les phases gazeuse et liquide du mélange précité. Une conduite 14 permet de recycler, vers l'entrée de la cathode 2, l'eau séparée de ce mélange. Par ailleurs, la phase gazeuse séparée, essentiellement constituée d'air appauvri en oxygène, est évacuée par une conduite 16.

Le bloc pile à combustible est en outre équipé de deux circuits supplémentaires, non représentés, permettant respectivement l'alimentation en hydrogène de l'anode, ainsi que l'évacuation, hors de cette anode, de l'hydrogène appauvri mélangé à de l'eau. Ce circuit d'évacuation peut également déboucher dans un autre séparateur de phases, non représenté, analogue à celui 12.

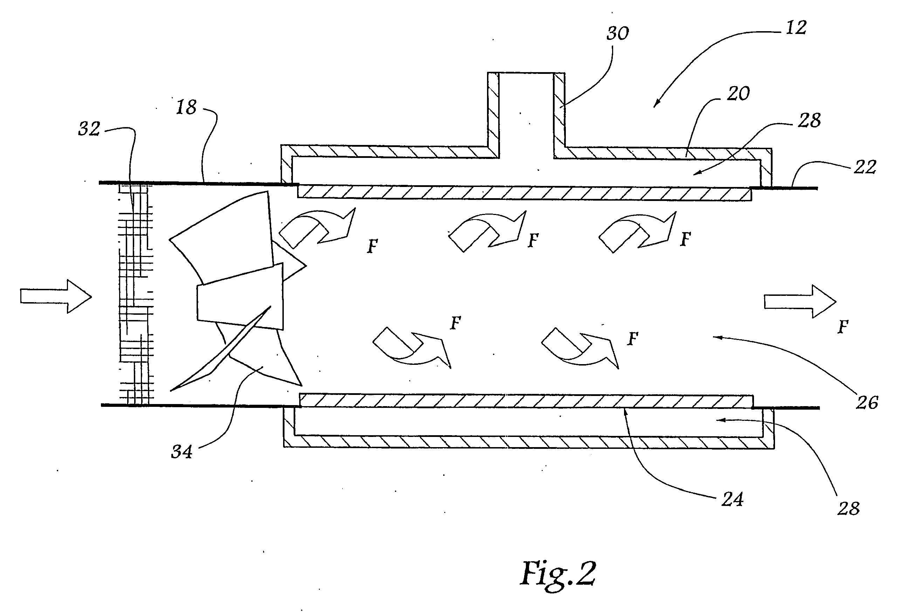

En faisant désormais référence à la figure 2, le séparateur de phases 12 comprend une entrée 18, mise en communication avec le circuit d'évacuation 8. Cette entrée tubulaire 18 se prolonge par un corps cylindrique 20, qui est coaxial à cette entrée mais présente un diamètre plus important.

Le corps 20 est terminé par une sortie 22, coaxiale à l'entrée 18 et d'un diamètre voisin. Ce corps reçoit une membrane hydrophile 24, qui est disposée de façon à former un cylindre coaxial à l'entrée 18 et à la sortie 22, de même diamètre que ces dernières. A cet effet, la membrane 24, par exemple réalisée en polyéthylène ou en nylon, est maintenue en place par joints et serrage.

Cette membrane définit ainsi, dans le corps du séparateur, deux espaces respectivement intérieur 26 et extérieur 28.

L'espace extérieur 28, qui est annulaire, est mis en communication avec une sortie radiale 30, dont est pourvu le corps 20. Cette sortie 30, qui permet l'évacuation de l'eau comme cela sera décrit dans ce qui suit, débouche dans la conduite de recyclage 14.

Un matelas coalesceur 32, de type connu, est disposé dans l'entrée 18 du séparateur 12. Ceci permet d'augmenter la taille des gouttelettes d'eau à récupérer, afin d'en améliorer la séparation.

En aval de ce matelas 32, il est prévu, dans l'exemple représenté, une hélice 34, disposée immédiatement en amont de la membrane hydrophile 24. Cette hélice permet de créer des tourbillons dans l'écoulement de gaz et d'eau, admis par l'entrée 18.

Le mélange s'écoule ainsi, dans l'espace intérieur 26, selon une trajectoire à peu près hélicoïdale, qui est matérialisée par les flèches F. A titre de variante, de tels tourbillons peuvent être induits en remplaçant l'hélice 34 par une entrée tangentielle de gaz.

De la sorte, l'eau initialement présente dans le mélange se trouve plaquée, du fait de la force centrifuge, contre les parois intérieures de la membrane 24, qui assure ainsi la récupération de cette eau.

L'évacuation de cette dernière s'effectue par l'intermédiaire de la sortie radiale 30. La qualité de cette évacuation peut être améliorée, en maintenant la pression de l'espace extérieur 28 à une valeur inférieure à celle régnant dans l'espace intérieur 26.

A cet effet, il est possible d'aspirer l'eau, par exemple par pompage, au niveau de la sortie 30. A titre de variante, il est également possible de tirer parti de la différence de pressions existant naturellement entre ces espaces intérieur 26 et extérieur 28.

La membrane 24 est telle que son point de bulles est plus élevé que l'écart de pressions existant, en service, entre l'espace intérieur 26 et l'espace extérieur annulaire 28. Ceci permet de s'affranchir de tout passage de gaz en direction de cet espace extérieur 28, de sorte que seule l'eau se trouve présente dans ce dernier.

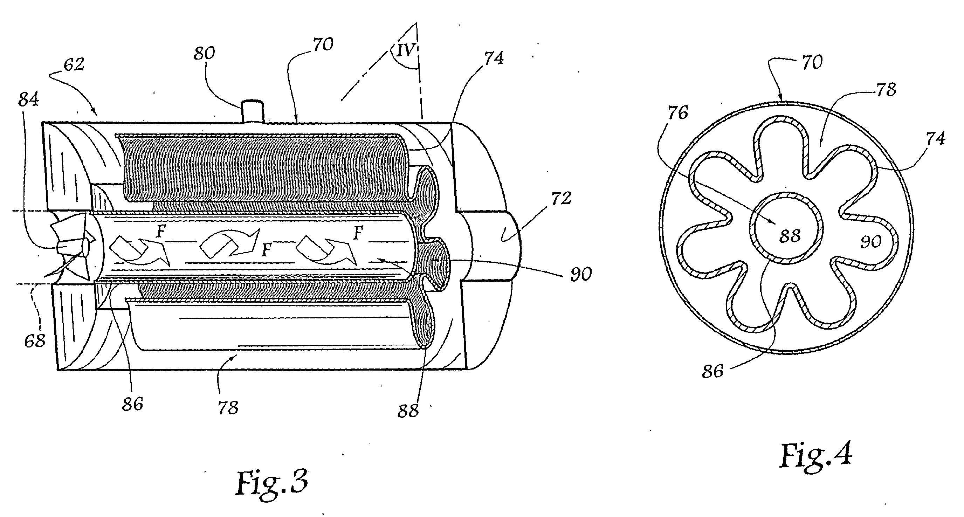

Les figures 3 et 4 illustrent une première variante de réalisation de l'invention. Sur ces figures, les éléments mécaniques identiques à ceux de la figure 2 sont affectés des mêmes numéros de référence, augmentés de 50.

Le séparateur 62 de ces figures 3 et 4 diffère de celui 12 de la figure 2, tout d'abord en ce que la membrane 74 n'affecte pas un profil cylindrique.

En effet, comme le montre la figure 4, cette membrane 74 est plissée, ou ondulée, vue selon une coupe transversale à l'écoulement du mélange. Ceci permet d'augmenter la surface de contact de cette membrane, et ainsi d'améliorer la séparation.

Par ailleurs, une membrane supplémentaire 86 est disposée dans l'espace intérieur 76 délimité par la membrane principale 74. Cette membrane 86 sépare ainsi cet espace intérieur 76 en une zone centrale 88 et une zone intercalaire 90, qui est annulaire.

Le point de bulles de la membrane intermédiaire 86 est avantageusement supérieur à la différence de pressions existant entre la zone centrale 88 et la zone intercalaire 90. Il est à noter que cette différence de pressions assure une récupération sensiblement intégrale de l'eau initialement présente dans la zone centrale 88. Ceci évite donc la stagnation de cette eau dans cette zone 88, et garantit une séparation efficace.

Une purge, non représentée, peut être prévue sur les parois du corps 70, de manière à déboucher dans la zone intercalaire 90. Une telle purge permet d'évacuer l'air présent dans cette zone intercalaire 90, et donc d'éviter que cet air ne reste piégé, et ne bouche le séparateur.

La membrane principale 74, dont le point de bulles est plus élevé que celui de la membrane intermédiaire 86, assure enfin la récupération de l'ensemble de l'eau admise par l'entrée 68. Cette eau est ensuite évacuée par la sortie 80, de façon analogue à ce qui a été décrit en référence à la figure 2.

Il est à noter que, dans l'exemple de réalisation de ces figures 3 et 4, la pression régnant dans la zone centrale 88 est légèrement supérieure à celle de la zone intercalaire 90, qui est elle-même nettement supérieure à celle régnant dans l'espace extérieur 78.

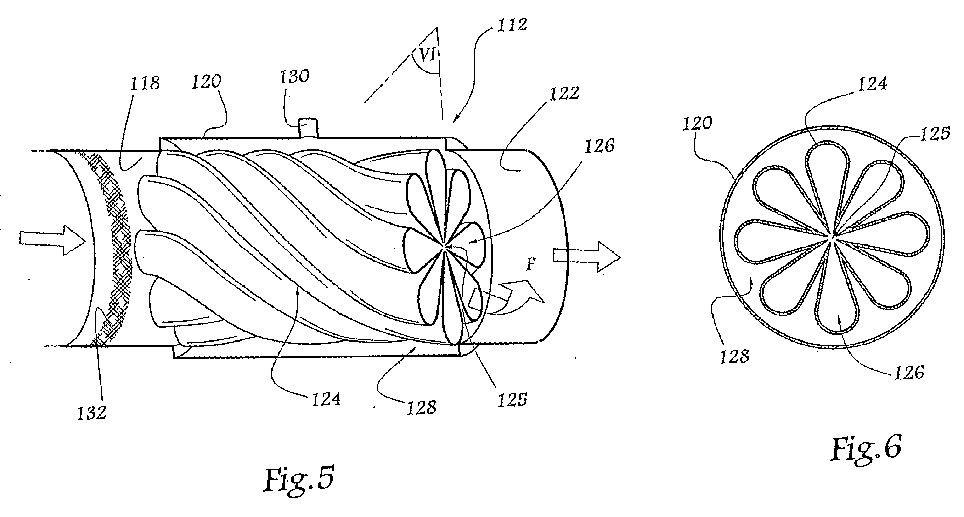

Les figures 5 et 6 illustrent une variante supplémentaire de réalisation. Sur ces figures, les éléments mécaniques analogues à ceux de la figure 2 sont affectés des mêmes numéros de référence, augmentés de 100.

Le séparateur 112 des figures 5 et 6 diffère de ceux des figures 2 à 4, en ce qu'il est dépourvu d'hélice. En effet, le mouvement tourbillonnant de l'écoulement d'eau et de gaz, admis par l'entrée 118, est assuré par la conformation même de la membrane hydrophile 124.

Ainsi, cette dernière présente une forme ondulée ou multilobée, ou plissée, vue selon une coupe transversale à la direction d'écoulement du mélange d'eau et de gaz. Il est à noter que la forme des plis de la membrane est telle, qu'ils laissent subsister une section libre centrale 125, dont la dimension transversale est particulièrement restreinte.

Par ailleurs, vue de côté à la figure 5, la membrane 124 présente un agencement spiralé, à savoir qu'elle forme globalement une hélice. De la sorte, le mélange d'eau et d'air admis par l'entrée 118 s'écoule selon un tourbillon, au fur et à mesure qu'il progresse le long de la membrane 124.

Le mode de réalisation de ces figures 5 et 6 est tout particulièrement avantageux, en termes économiques. En effet, il permet de confondre., en une même membrane, deux fonctions distinctes, à savoir celles de création des tourbillons, ainsi que de récupération de l'eau.

L'invention permet de réaliser les objectifs précédemment mentionnés.

En effet, le séparateur de phases conforme à l'invention est d'une structure particulièrement simple, et fait appel à un nombre restreint d'éléments constitutifs.

Par ailleurs, faire appel à une membrane hydrophile permet de diviser ce séparateur en deux compartiments distincts, destinés à l'évacuation respectivement de l'eau et du gaz. De la sorte, il est possible de conférer une pression inférieure au compartiment réservé à l'eau, ce qui garantit une récupération particulièrement efficace de cette dernière.

## Revendications

1. Séparateur de phases (12 ; 62 ; 112) gazeuse et liquide, comprenant un corps (20 ; 70 ; 120), une entrée (18 ; 68 ; 78) d'un mélange diphasique à séparer, comportant du gaz et du liquide, une sortie (22 ; 72 ; 122) de gaz et une sortie (30 ; 80; 130) de liquide, **caractérisé en ce qu'**il comprend en outre une structure hydrophile (24 ; 74 ; 124), qui est disposée dans le corps et délimite un espace intérieur (26 ; 76 ; 126) et un espace extérieur (28 ; 78 ; 128) de ce corps, **en ce qu'**il est prévu des moyens (34 ; 84 ; 124), permettant de créer des tourbillons dans le mélange diphasique, lorsque celui-ci s'écoule dans ledit espace intérieur (26 ; 76 ; 126), de manière à récupérer le liquide contre les parois de ladite structure hydrophile (24 ; 74 ; 124), **en ce que** la sortie de gaz est en communication avec l'espace intérieur (26 ; 76 ; 126), et **en ce que** la sortie de liquide est en communication avec l'espace extérieur (28 ; 78 ; 128).

2. Séparateur de phases selon la revendication 1, **caractérisé en ce que** les moyens de création des tourbillons comprennent un organe rapporté profilé, notamment une hélice (34 ; 84).

3. Séparateur de phases selon la revendication 1, **caractérisé en ce que** les moyens de création des tourbillons sont constitués par ladite structure hydrophile (124).

4. Séparateur de phases selon la revendication 3, **caractérisé en ce que** la structure hydrophile (124) s'étend, vue de côté, selon une spirale et présente, vue en coupe transversale, une forme plissée.

5. Séparateur de phases selon l'une quelconque des revendications précédentes, **caractérisé en ce qu'**il est prévu, dans l'espace intérieur (76), une membrane hydrophile intermédiaire (86), séparant cet espace intérieur en une zone centrale (88) et une zone intercalaire (90).

6. Séparateur de phases selon la revendication 5, **caractérisé en ce qu'**il est prévu une purge, mise en communication avec cette zone intercalaire (90), apte à évacuer la phase gazeuse présente dans cette zone intercalaire.

7. Séparateur de phases selon l'une des revendications précédentes, **caractérisé en ce que** la structure hydrophile est constituée par une membrane hydrophile principale (24 ; 74 ; 124).

8. Séparateur de phases selon les revendications 5 et 7, **caractérisé en ce que** la membrane intermédiaire (86) possède un point de bulles inférieur à celui de la membrane hydrophile principale (74).

9. Séparateur de phases selon l'une des revendications précédentes, **caractérisé en ce que** l'entrée du mélange (18 ; 68 ; 118) et la sortie de gaz (22 ; 72 ; 122) sont axiales, en faisant référence à la direction d'écoulement du mélange diphasique, alors que la sortie de liquide (30 ; 80 ; 130) est radiale.

10. Ensemble de production d'énergie à base de pile à combustible, comprenant un bloc pile à combustible, qui comporte un compartiment cathodique (2), un compartiment anodique, au moins deux circuits d'alimentation (6) en gaz et au moins deux circuits d'évacuation (8), dont chacun permet d'évacuer un mélange de gaz et d'eau hors du bloc pile, cet ensemble étant **caractérisé en ce qu'**au moins un circuit d'évacuation (8) débouche dans un séparateur de phases (12) gazeuse et liquide, conforme à l'une des revendications précédentes.

## Claims

1. Gas and liquid phase separator (12; 62; 112), comprising a body (20; 70; 120), an inlet (18; 68; 78) for a diphasic mixture containing gas and liquid to be separated, a gas outlet (22; 72; 122) and a liquid outlet (30; 80; 130), **characterized in that** it furthermore comprises a hydrophilic structure (24; 74; 124) which is arranged in the body and delimits an internal space (26; 76; 126) and an external space (28; 78; 128) with respect to this body, **in that** means (34; 84; 124) are provided for creating vortices in the diphasic mixture when it is flowing through said internal space (26; 76; 126), so as to recover the liquid against the walls of said hydrophilic structure (24; 74; 124), **in that** the gas outlet is in communication with the internal space (26; 76; 126), and **in that** the liquid outlet is in communication with the external space (28; 78; 128).

2. Phase separator according to Claim 1, **characterized in that** the means for producing vortices comprise a profiled auxiliary member, in particular an impeller (34; 84).

3. Phase separator according to Claim 1, **characterized in that** the means for producing vortices consist of said hydrophilic structure (124).

4. Phase separator according to Claim 3, **characterized in that** the hydrophilic structure (124) extends along a spiral as viewed from the side, and has an involute shape as viewed in cross section.

5. Phase separator according to any one of the preceding claims, **characterized in that** a secondary hydrophilic membrane (86) is provided in the internal space (76), which separates this internal space into a central region (88) and an intermediate region (90).

6. The phase separator according to Claim 5, **characterized in that** a purge placed in communication with this intermediate region (90) is provided, which is capable of discharging the gas phase present in this intermediate region.

7. Phase separator according to any one of the preceding claims, **characterized in that** the hydrophilic structure consists of a primary hydrophilic membrane (24; 74; 124).

8. Phase separator according to Claims 5 and 7, **characterized in that** the secondary membrane (86) has a bubble point lower than that of the primary hydrophilic membrane (74).

9. Phase separator according to any one of the preceding claims, **characterized in that** the inlet (18; 68; 118) for the mixture and the gas outlet (22; 72; 122) are axial, with reference to the flow direction of the diphasic mixture, while the liquid outlet (30; 80; 130) is radial.

10. Assembly for energy production based on fuel cells, comprising a fuel cell block which has a cathode compartment (2), an anode compartment, at least two gas feed circuits (6) and at least two discharge circuits (8), each of which makes it possible to discharge a mixture of gas and water from the cell block, this assembly being **characterized in that** at least one discharge circuit (8) leads into a gas and liquid phase separator (12) according to one of the preceding claims.

## Patentansprüche

1. Gas/Flüssigphasentrennvorrichtung (12; 62; 112), die einen Körper (20; 70; 120), einen Eingang (18; 68; 78) einer zu trennenden zweiphasigen Mischung, die Gas und Flüssigkeit umfasst, einen Gasausgang (22; 72; 122) und einen Flüssigkeitsausgang (30; 80; 130) umfasst, **dadurch gekennzeichnet, dass** sie zudem eine hydrophile Struktur (24; 74; 124) umfasst, die im Körper angebracht ist, und einen inneren Raum (26; 76; 126) und einen äußeren Raum (28; 78; 128) dieses Körpers begrenzt, **dadurch**, dass er mit Mitteln (34; 84; 124) versehen ist, die es ermöglichen, Wirbel in der zweiphasigen Mischung zu erzeugen, wenn diese in den inneren Raum (26; 76; 126) einströmt, um die Flüssigkeit gegen die Wände der hydrophilen Struktur (24; 74; 124) wiederzugewinnen, **dadurch**, dass der Gasausgang mit dem inneren Raum (26; 76; 126) kommuniziert, und **dadurch**, dass der Flüssigkeitsausgang mit dem äußeren Raum (28; 78; 128) kommuniziert.

2. Phasentrennvorrichtung nach Anspruch 1, **dadurch gekennzeichnet, dass** die Mittel zur Erzeugung der Wirbel ein aufliegendes Profil-Organ, insbesondere eine Schraube (34; 84) umfassen.

3. Phasentrennvorrichtung nach Anspruch 1, **dadurch gekennzeichnet, dass** die Mittel zur Erzeugung der Wirbel aus der hydrophilen Struktur (124) bestehen.

4. Phasentrennvorrichtung nach Anspruch 3, **dadurch gekennzeichnet, dass** sich die hydrophile Struktur (124), von der Seite gesehen, gemäß einer Spirale ausdehnt, und, im Querschnitt gesehen, eine gefaltete Form aufweist.

5. Phasentrennvorrichtung nach irgendeinem der vorstehenden Ansprüche, **dadurch gekennzeichnet, dass** im inneren Raum (76) eine hydrophile Zwischenmembran (86) vorgesehen ist, die diesen inneren Raum in eine mittlere Zone (88) und eine eingeschobene Zone (90) trennt.

6. Phasentrennvorrichtung nach Anspruch 5, **dadurch gekennzeichnet, dass** ein Entlüfter vorgesehen ist, der mit dieser eingeschobenen Zone (90) in Kommunikation gebracht wird, der in der Lage ist, die Gasphase, die in dieser eingeschobenen Zone vorhanden ist, abzuleiten.

7. Phasentrennvorrichtung nach einem der vorstehenden Ansprüche, **dadurch gekennzeichnet, dass** die hydrophile Struktur aus einer hydrophilen Hauptmembran (24; 74; 124) besteht.

8. Phasentrennvorrichtung nach den Ansprüchen 5 und 7, **dadurch gekennzeichnet, dass** die Zwischenmembran (86) einen Sprudelpunkt besitzt, der unterhalb desjenigen der hydrophilen Hauptmembran (74) liegt.

9. Phasentrennvorrichtung nach einem der vorstehenden Ansprüche, **dadurch gekennzeichnet, dass** der Eingang der Mischung (18; 68; 118) und der Gasausgang (22; 72; 122), bezogen auf die Abflussrichtung der zweiphasigen Mischung, axial sind, während der Flüssigkeitsausgang (30; 80; 130) radial ist.

10. Energieerzeugungseinheit auf Brennstoffzellenbasis, die einen Brennstoffzellenblock umfasst, der ein Kathodenabteil (2), ein Anodenabteil, mindestens zwei Gasversorgungssysteme (6) und mindestens zwei Ableitungssysteme (8) umfasst, wovon es jedes ermöglicht, eine Mischung aus Gas und Wasser aus dem Zellenblock abzuleiten, wobei diese Einheit **dadurch gekennzeichnet ist, dass** mindestens ein Ableitungssystem (8) in einer Gas/Flüssigphasentrennvorrichtung (12) mündet, die mit einem der vorstehenden Ansprüche übereinstimmt.
